# EUROPEAN PATENT APPLICATION

(11) **EP 2 961 057 A1**
(43) Date of publication of application: **30.12.2015**
(21) Application number: 14174613.1
(22) Date of filing: 26.06.2014
(51) Int. Cl.: H02M 7/797, H02J 3/18

(54) **Voltage source converter and control thereof**

(71) Applicant: Alstom Technology Ltd., 5400 Baden (CH)
(72) Inventor: TRAINER, David, Alvaston Derby DE24 0AQ (GB); MORENO, Francisco, Mill Bank Stafford ST16 2QZ (GB)
(74) Representative: Haseltine Lake LLP

(57) **Abstract**

This application relates to a voltage source converter (VSC) suitable for use, for example, for use in high voltage DC power distribution. The VSC has at least one phase limb (1 02a-c) having high side and low side converter arms. A converter arm comprises a first plurality of cells (103) for voltage wave-shaping, each cell comprising an energy storage element (105) such as a capacitor that can be selectively connected in series in the converter arm or bypassed. The converter arm also has a high voltage module (202; 501) connected in series with the first plurality of cells, the high voltage module comprising at least one energy storage element (206) such as a high voltage capacitor that can be selectively connected in series in the converter arm or bypassed. The voltage rating of the high voltage module (202, 501), i.e. the voltage stored in use, is greater than any of the cells (103) of the first plurality of cells. In use the high voltage module (202; 501) thus maintains a significantly greater voltage than any of the cells (103), for example at least half the magnitude of the voltage of a DC terminal of the converter and may be controlled by a controller (207) to provide voltage blocking support in an arm off state.

## Description

This application relates to a voltage source converter and to methods and apparatus for control of a voltage source converter, and especially to a voltage source converter for use in high voltage power distribution and in particular to a voltage source converter having converter arms with a plurality of cells for wave-shaping and at least one cell for voltage blocking.

HVDC (high-voltage direct current) electrical power transmission uses direct current for the transmission of electrical power. This is an alternative to alternating current electrical power transmission which is more common. There are a number of benefits to using HVDC electrical power transmission.

In order to use HVDC electrical power transmission, it is typically necessary to convert alternating current (AC) to direct current (DC) and back again. Historically this has involved a six pulse bridge type topology based on thyristors which is sometimes known as a line-commutated converter (LCC).

Recent developments in the power electronics field have led to an increased use of voltages-source converters (VSC) for AC-DC and DC-AC conversion. VSCs typically comprise multiple converter arms, each of which connects one DC terminal to one AC terminal. For a typical three phase AC input/output there are six converter arms, with the two arms connecting a given AC terminal to the high and low DC terminals respectively forming a phase limb. Each converter arm comprises an apparatus which is commonly termed a valve and which typically comprises a plurality of elements which may be switched in a desired sequence.

In one form of known VSC, often referred to as a six pulse bridge, each valve comprises a set of series connected switching elements, typically insulated gate bipolar transistors (IGBTs) connected with respective antiparallel diodes. The IGBTs of the valve are switched together to electrically connect or disconnect the relevant AC and DC terminals, with the valves of a given phase limb typically being switched in anti-phase. By using a pulse width modulated (PWM) type switching scheme for each arm, conversion between AC and DC voltage can be achieved.

In high voltage applications where a large number of series connected IGBTs are required the approach does however require complex drive circuitry to ensure that the IGBTs switch at the same time as one another and requires large passive snubber components to ensure that the high voltage across the series connected IGBTs is shared correctly. In addition the IGBTs need to switch on and off several times over each cycle of the AC voltage frequency to control the harmonic currents. These factors can lead to relatively high losses in conversion, high levels of electromagnetic interference and a complex design.

In another known type of VSC, referred to a modular multilevel converter (MMC), each valve comprises a plurality of cells connected in series, each cell comprising an energy storage element such as a capacitor and a switch arrangement that can be controlled so as to either connect the energy storage element between the terminals of the cell or bypass the energy storage element. The cells are sometimes referred to as sub-modules, with a plurality of cells forming a valve module. The sub-modules of a valve are controlled to connect or bypass their respective energy storage elements at different times so as to vary over the time the voltage difference across the plurality of cells. By using a relatively large number of sub-modules and timing the switching appropriately the valve can synthesise a stepped waveform that approximates to a desired waveform, such as a sine wave, to convert from DC to AC or vice versa with low levels of harmonic distortion. As the various sub-modules are switched individually and the changes in voltage from switching an individual sub-module are relatively small a number of the problems associated with the six pulse bridge converter are avoided.

In the MMC design each valve is operated continually through the AC cycle with the two valves of a phase limb being switched in synchronism to provide the desired voltage waveform. Consequently the high side terminal of each valve will, for at least for part of the cycle of the AC waveform, be connected to a voltage which is substantially equal to the high DC busbar voltage, +V_{DC}, whilst the low side terminal is connected to a voltage which is substantially equal to the low DC busbar voltage, -V_{DC}. Thus the valve of each converter arm must be designed to withstand the voltage difference between the two DC terminals, i.e. a voltage of 2V_{DC}. This requires each valve to have a large number of sub-modules. The MMC converter may therefore require a relatively large number of components adding the cost and size of the converter.

Recently a variant converter has been proposed wherein a series of connected cells is provided in a converter arm for providing a stepped voltage waveform as described, but each converter arm is turned off for at least part of the AC cycle. Thus the plurality of series connected cells for voltage wave-shaping are connected in series with switching elements which can be turned off when the relevant converter arm is in the off state and not conducting. Such a converter has been referred to as an Alternate-Arm-Converter. An example of such a converter is described in WO2010/149200.

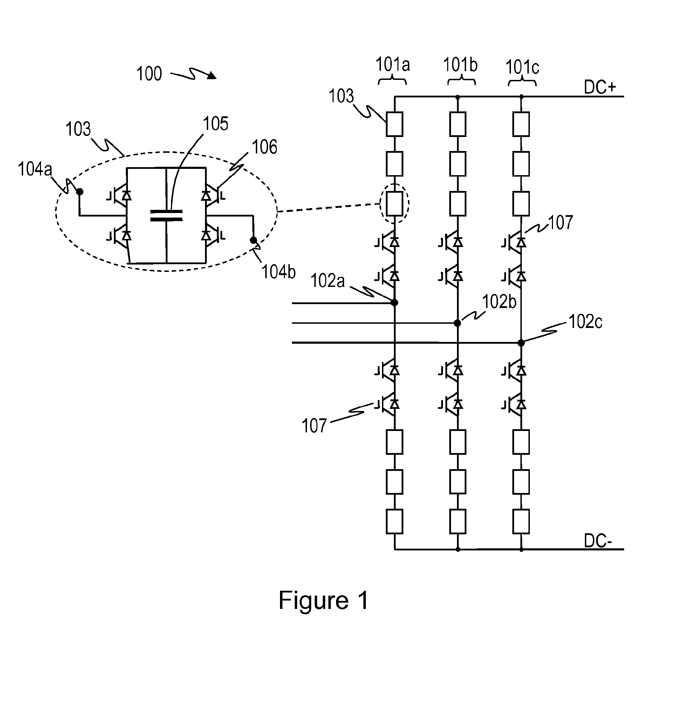

Figure 1 illustrates a known Alternate-Arm-Converter (AAC)100. The example converter 100 has three phase limbs 101 a-c, each phase limb having a high side converter arm connecting the relevant AC terminal 102a-c to the high side DC terminal DC+ and a low side converter arm connecting the relevant AC terminal 102a-c to the low side DC terminal DC-. Each converter arm comprises a plurality of cells 103 in series, each cell having an energy storage element that can be selectively connected in series between the terminals of the cell or bypassed. In the example shown in figure 1 each cell has terminals 104a, 104b for high-side and low-side connections respectively and comprises a capacitor 105 as an energy storage element. The capacitor 105 is connected with switching elements 106, e.g. IGBTs with antiparallel diodes, to allow the terminals 104a and 104b of the cell to be connected via a path that bypasses capacitor 105 or via a path that includes capacitor 105 connected in series. In the example illustrated in figure 1 each cell comprises four switching elements 106 in a full H-bridge arrangement such that the capacitor can be connected in use to provide either a positive or a negative voltage difference between the terminals 104a and 104b. In some embodiments however at least some of the cells may comprise switching elements in a half bridge arrangement such that the capacitor can be bypassed or connected to provide a voltage difference of a given polarity. The series connection of such cells 103 is sometimes referred to as a chain-link circuit or chain-link converter.

In the AAC converter the series connected cells 103 in each converter arm are connected in series with arm switching elements 107, which may for example comprise high voltage elements with turn-off capability such as IGBTs or the like with antiparallel diodes. When a particular converter arm is conducting the series connected cells are switched in sequence to provide a desired waveform in a similar fashion as described above with respect to the MMC type converter. However in the AAC converter each of the converter arms of a phase limb is switched off for part of the AC cycle and during such a period the arm switching elements are turned off. When the converter arm is thus in an off state and not conducting the voltage across the arm is shared between the arm switching elements and the series connected cells, i.e. chain-link circuit. This can reduce the maximum voltage across the series connected cells, i.e. chain-link circuit, in use.

For example consider that the converter is operated such that the voltage at the AC terminals varies between the high side DC voltage +V_{DC} and the low side DC voltage -V_{DC} over the course of the AC cycle and that the high side converter arm is on for the positive part of the AC cycle but is switched off for the negative part of the DC cycle (and the low side converter arm is controlled in antiphase). During the positive part of the AC cycle the voltage at the AC terminal varies between zero (i.e. the midpoint voltage, typically ground) and +V_{DC}. During this period the maximum voltage difference across the series connected cells of the high side converter arm, will thus be equal in magnitude to V_{DC}.

For the negative part of the AC cycle the voltage at the AC terminal goes negative, leading to a greater voltage difference across the high side converter arm. If however the arm switching elements of the high side arm are turned off for the negative part of the AC cycle then the voltage across the converter arm is shared between the arm switching elements and the plurality of series connected cells. If the arm switching elements have a voltage withstand capability of magnitude V_{DC} then the maximum voltage across the series connected cells of the high side converter arm in the negative half of the AC cycle will also be of magnitude V_{DC}. The same principles would apply to the low side phase arm. Thus the cells of the converter arm could be designed for a maximum normal operating voltage of V_{DC} rather than 2V_{DC} as could be required for an MMC type converter. This allows for the use of fewer components, even with the requirement for the arm switching elements with consequently lower costs and reduced size.

Embodiments of the invention are directed at an improved converter and methods and apparatus for the control thereof.

Thus according to the present invention there is provided voltage source converter having at least one phase limb, each phase limb comprising a high side converter arm connecting an AC terminal to a high side DC terminal and a low side converter arm connecting the AC terminal to a low side DC terminal, wherein at least one converter arm comprises:
a first plurality of cells, each cell of said first plurality comprising an energy storage element that can be selectively connected in series in the converter arm or bypassed; and
a high voltage module connected in series with said first plurality of cells, the high voltage module comprising at least one energy storage element that can be selectively connected in series in the converter arm or bypassed,
wherein the voltage rating of the high voltage module is greater than any of the cells of the first plurality of cells.

Embodiments of the present invention are thus similar to an AAC type converter in that there is a first plurality of cells in each converter arm with energy storage elements that can be selectively connected and disconnected into the converter arm circuit to provide voltage wave-shaping. In embodiments of the present invention at least one, and advantageously each, converter arm also has a high voltage module comprising at least one energy storage element, such as a high voltage capacitor, that can be connected in series with the first plurality of cells. The voltage rating of the high voltage module, i.e. the operating voltage stored by the at least one energy storage element of the high voltage module in use is greater than any cell of the first plurality of cells. Advantageously the voltage rating of the high voltage module is at least half of the voltage magnitude, in use, of the DC terminal to which the converter arm is connected.

As will be understood by one skilled in the art the cells of the converter arm which are used for wave-shaping are designed to provide a voltage step which is a relatively small fraction of the magnitude of the DC voltage at a DC terminal. The high voltage module comprises at least one energy storage element with a significantly higher voltage rating. The voltage maintained by the high voltage module is thus a significant fraction of the magnitude of the voltage of the relevant DC terminal, for instance at least half the magnitude of the voltage of the relevant DC terminal or at least a quarter of the magnitude of the voltage of the relevant DC terminal. In some applications the voltage stored in use by the high voltage module may be substantially equal to the magnitude of the voltage at the DC terminal. This is significantly higher than the voltage stored in use by a cell of the first plurality of cells, for instance the voltage stored in use, or the voltage rating, of the energy storage elements of the high voltage module may be at least ten times greater, or at least twenty times greater or at least fifty time greater than that of the energy storage elements of any of the cells of the first plurality of cells provided for voltage wave-shaping.

In use the energy storage elements of the high voltage module may be selectively connected in series with the first plurality of cells to provide voltage blocking support in a converter arm off state and/or to reduce the number of cells of the first plurality of cells required compared to an alternative without the high voltage module.

The high voltage module may comprise at least one first switching element for selectively providing an electrical path that bypasses the at least one energy storage element and at least one second switching element for selectively providing an electrical path that connects the at least one energy storage element in series in the converter arm. In some embodiments the at least one second switching element may comprise at least one uncontrolled switching element such as a diode or the like. The at least one first switching element may comprise a controlled switching element such as an IGBT or the like. The energy storage elements of the high voltage module may therefore be connected to the converter arm by switches in a half-bridge arrangement.

In some embodiments the high voltage module may comprise at least one third switching element for selectively allowing the at least one energy storage element to be bypassed or connected to provide a voltage of a first polarity and at least one fourth switching element for selectively allowing the at least one energy storage element to be connected to provide a voltage of a second polarity which is opposite to the first polarity. The third and fourth switching elements thus allow the polarity of the voltage provided by the energy storage elements of the high voltage module to be reversed. The energy storage elements of the high voltage module may therefore be connected in the converter arm by switches in a full-bridge arrangement.

Being able to connect the energy storage elements of the high voltage module, e.g. a high voltage capacitor, to provide both positive and negative voltages means that the high voltage module can be used to provide one polarity when required during normal operation but also to provide the opposite polarity to provide fault blocking in a DC fault situation. The voltage source converter may then comprise a fault controller configured to control the third and fourth switching elements such that in normal operation the at least one third switching element is turned on and the at least one fourth switching element is off and such that, in response to a detection of a DC fault, the third switching element is turned off and the at least one fourth switching element is on.

Typically a voltage source converter may have a plurality of phase limbs. In some embodiments each converter arm may comprise a separate high voltage module. In some embodiments however a high voltage module may be shared between multiple converter arms. Thus a high voltage module may be connected to a plurality of converter arms such that the at least one energy storage element can be connected in series to more than one converter arm.

The converter may comprise a converter controller configured to control the converter arm in a sequence comprising an arm on state and an arm off state, wherein in the arm on state the first plurality of cells is selectively controlled to provide voltage wave-shaping and in the arm off state the high voltage module is controlled to connect the at least one energy storage element in series with the first plurality of cells.

In some embodiments the converter controller is configured such that when the converter arm is in the arm on state the high voltage module is controlled such that at least one energy storage element is bypassed. In other words the energy storage elements of the high voltage module are only used, in normal operation, to provide voltage blocking support in the arm off state.

In some embodiments however the converter controller may be configured to control the high voltage module such that for part of the time that that converter arm is in the arm on state the at least one energy storage element is connected in series with the first plurality of cells. In other words the energy storage elements of the high voltage module may be connected in series during the arm on state. In such embodiments the voltage rating of the high voltage module may be a fraction of the magnitude of the voltage of the DC terminal to which the converter arm is connected. In other words the voltage step introduced in the converter arm by connecting the energy storage elements of the high voltage module in series with the first plurality of cells is a fraction of the magnitude of the DC terminal voltage, for example the voltage step may be of the order of half the magnitude of the DC terminal voltage.

Having a high voltage module that can introduce such a significant voltage step into the converter arm can lessen the maximum voltage difference experienced by the first plurality of cells during the arm on state and consequently voltage range required, compared to an alternative without a high voltage module. This can allow fewer components to be used in the converter, with a consequent saving on cost and reduced size.

The period during the arm on state in which the at least one energy storage element is connected in series with the first plurality of cells may correspond to a period in which both converter arms of the phase limb are in the arm on state.

In such embodiments the high voltage module of a converter arm may not itself be able to provide sufficient voltage blocking support in the arm off state. In some embodiments there may be more than one high voltage module in each converter arm. Additionally or alternatively there may be at least one arm switching element in series with the high voltage module in a converter arm, and the converter controller may be configured to control the at least one arm switching element to be on in the converter arm on state and to be off in the converter arm off state.

As mentioned above however in some embodiments the high voltage module may be configured to provide all necessary voltage blocking support in the arm off state. Thus in some embodiments the voltage rating of the high voltage module is substantially equal to the voltage magnitude, in use, of the DC terminal to which the converter arm is connected.

In some embodiments each converter arm of a phase limb comprises a high voltage module and the low side terminal of the at least one energy storage element of the high voltage module of the high side converter arm is connected to a high side terminal of the at least one energy storage element of the high voltage module of the low side converter arm via at least one filter component.

Where energy storage elements such as high voltage capacitors that, in use, store a voltage equal in magnitude to the DC terminal voltage are connected to the DC terminals, the terminals of such capacitors that are not connected to the DC terminals do not experience any DC voltage stress. Such energy storage elements may therefore be used in a DC filter arrangement. The filter may be a passive filter and thus the filter components may comprise for example inductances and resistances. In some embodiments however the filter components may comprise a chain-link circuit of full bridge cells for active filtering.

In another aspect of the invention there is provided a method of operating a voltage source converter having at least one phase limb, each phase limb comprising a high side converter arm connecting an AC terminal to a high side DC terminal and a low side converter arm connecting the AC terminal to a low side DC terminal, wherein at least one converter arm comprises:
a first plurality of cells, each cell of said first plurality comprising an energy storage element that can be selectively connected in series in the converter arm or bypassed; the method comprising:
   selectively switching the cells of the first plurality of cells to provide voltage wave-shaping during an on state of the converter arm; and;
      during an off state of the converter arm connecting at least one energy storage element of a high voltage module in series with the first plurality of cells, wherein the voltage of the at least one energy storage element of the high voltage module is greater than the voltage of any of the energy storage elements of the first plurality of cells.

The method of this aspect of the invention offers all of the same advantages and can be operated in all of the variants as described with respect to the various embodiments outlined above.

The invention will now be described by way of example only, with reference to the accompanying drawings, of which:
Figure 1 illustrates a known alternate-arm-type converter;
Figure 2 illustrates a voltage source converter having a high voltage capacitor module for voltage blocking according to an embodiment of the invention;
Figure 3a illustrates a converter arm according to an embodiment of the invention and figures 3b and 3c illustrate the on and off states respectively;
Figure 4a illustrates a converter arm according to another embodiment of the invention and figures 4b and 4c illustrate the on and off states respectively of such a converter arm;
Figure 5 illustrates a voltage source converter according to an embodiment of the invention wherein a high voltage module is shared between multiple converter arms;
Figure 6 illustrates a voltage source converter according to an embodiment of the invention wherein high voltage modules may be used for fault blocking;
Figure 7 illustrates how high voltage modules of an embodiment of the invention may be used to provide a voltage step during an on state of a converter arm;
Figure 8 illustrates a converter arm having more than one high voltage module;
Figure 9 illustrates a converter with a high voltage module and arm switching elements;
Figure 10 illustrates various overlap operation modes of a phase limb of a converter according to embodiments of the invention; and
Figure 11 illustrates a converter according to embodiments of the invention with filter components.

Embodiments of the present invention relate to a voltage source converter in which a converter arm has a first plurality of cells that can be selectively controlled to provide voltage wave-shaping, the first plurality of cells being configured in series with at least one high voltage module comprising at least one energy storage element such as a capacitor that can be selectively connected to provide voltage blocking in an off state of the converter arm. The voltage rating of the or each high voltage module, i.e. the voltage that can be stored by the energy storage element(s) of the high voltage module, is greater than that of the cells of the first plurality of cells.

The converter of embodiments of the present invention is similar to a converter of the Alternate-Arm-Converter type in that a converter arm has a first plurality of cells for providing voltage wave-shaping during an on-state of the converter arm and also elements for enabling an off state of the converter arm. However at least some of the arm switching elements of the converter described above with reference to figure 1 are replaced by the high voltage module.

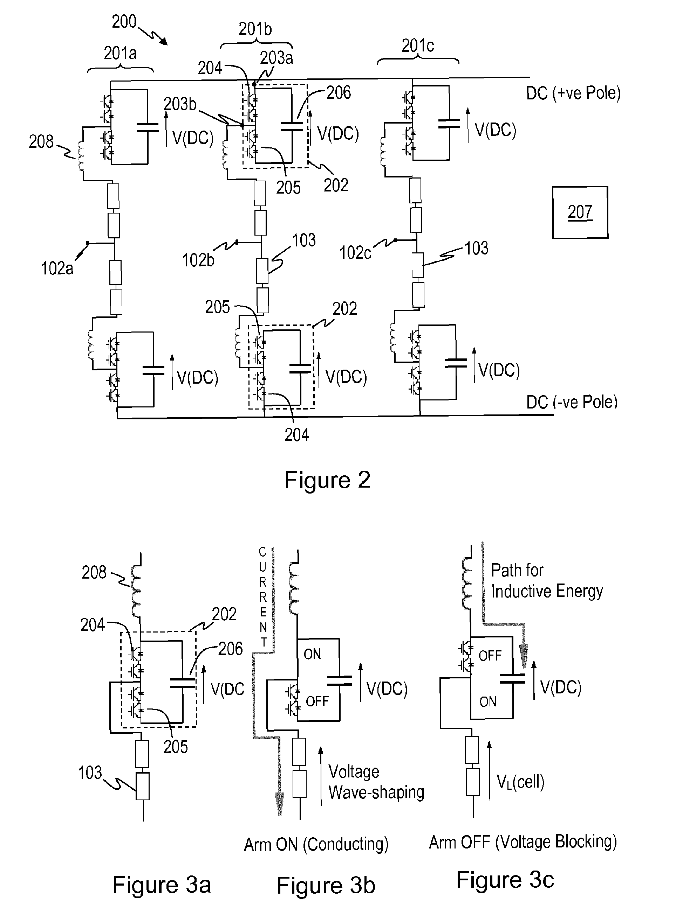

Figure 2 illustrates an example of a voltage source converter according to one embodiment of the present invention. Similar components as described above with reference to figure 1 are identified using the same reference numerals.

Figure 2 illustrates a converter 200 which has three phase limbs 201a-c, each phase limb having a high side converter arm connecting the relevant AC terminal 102a-c to the high side DC terminal DC+ and a low side converter arm connecting the relevant AC terminal 102a-c to the low side DC terminal DC-. Each converter arm comprises a plurality of series connected cells 103 for wave-shaping, i.e. for being selectively switched in sequence to generate a desired voltage waveform when the converter arm is in an on state, i.e. when the converter arm is conducting. Each cell 103 may be of the form illustrated in Figure 1 and thus may comprise an energy storage element capable of maintaining a voltage, in this example a capacitor 105, connected with switches 106, such as IGBTs, so that the capacitor can be connected in series between the terminals 104a and 104b of the cell or bypassed. The capacitor 105 may connected with switches 106 in a full-bridge arrangement as illustrated in figure 1 such that a cell can be switched to a bypass state to bypass the capacitor or to either of two voltage states to provide a positive voltage or a negative voltage respectively between the cell terminals. In some embodiments at least some cells may comprise a half-bridge arrangement which allows a bypass state and a voltage state of one polarity. In some embodiments the cells 103 may comprise multiple capacitors together with a switch arrangement that allows the multiple capacitors of a cell to be selectively connected in series and/or in parallel. Any type of cell that may be use for voltage wave-shaping as is known in the art may be used as cell 103. It will be appreciated that Figure 2 illustrates only two cells in each converter arm but in practice there may be significantly more cells, for instance of the order of several tens or hundreds of cells.

In the embodiment of figure 2, in each converter arm the plurality of series connected cells 103, which together form a chain-link converter, is connected in series with a high voltage module 202. Each high voltage module comprises one or more energy storage elements, in this example a high voltage capacitor 206, that may be selectively bypassed or connected in series with the plurality of cells 103 of the converter arm. The high voltage module 203 in this example thus has a first terminal 203a for connecting to the relevant DC terminal (DC+, DC-) and a second terminal for connecting to the plurality of series connected cells 103 of the converter arm. The high voltage module comprises at least one first switch element 204 for connecting the terminals 203a and 203b in a bypass path that does not include high voltage capacitor 206 and at least one second switch element 205 for providing a path between the terminals 203a and 203b that includes the high voltage capacitor 206 in series. In this example the high voltage module thus comprises a high voltage capacitor connected with first and second switching elements, which may be IGBTs or the like with antiparallel diodes, in a half bridge arrangement.

Like the cells 103 of the plurality of series connected cells the high voltage modules thus have one or more capacitors (or other similar energy storage elements) that can be selectively connected into series in the converter arm or bypassed. However the voltage rating of a high voltage module is greater than that that of the cells 103, i.e. the voltage that can be maintained in use by capacitor(s) 206 of the high voltage module is greater than that for the cells 103. In the embodiment illustrated in Figure 2 the capacitor(s) 206 of the high voltage module can maintain a voltage substantially equal to the magnitude of the DC voltage at the relevant DC terminal, i.e. a voltage equal to V_{DC}.

It will be appreciated that the cells 103 are designed to allow for selectively connection of their capacitors for generation of a synthesised waveform that approximates to the AC waveform. The voltage step provided by each capacitor of a cell 103 is thus designed to be a relatively small fraction of the magnitude of the DC voltage at a DC terminal and each cell 103 is generally arranged to provide the same voltage step as each other cell. In embodiments of the present invention the voltage provided by the high voltage module is intended to be a significant and substantial part of the magnitude of the voltage at the DC terminal and, as mentioned, in some embodiments may be substantially equal to the magnitude of the voltage at the DC terminal. The voltage rating of the high voltage module is thus significantly greater than the voltage rating of the relatively lower voltage cells 103, for instance at least ten or twenty times greater. The voltage step due to connecting or disconnecting the high voltage capacitor(s) is thus significantly larger than the voltage step resulting from connecting or disconnecting the capacitor of just one of the cells 103.

In use, when a converter arm is operated in the on state and is conducting the at least one first switch element 204 is turned on, with the at least one second switch element 205 turned off. This bypasses the capacitor 206. The plurality of cells 103 may then be switched in sequence to provide wave-shaping as with a conventional AAC. When the converter arm is to be switched into an off state the at least one first switch element 204 is turned off and the at least one second switch element 205 is turned on. This inserts high voltage capacitor 206, which stores a voltage substantially equal in magnitude to the voltage V_{DC} of the relevant DC terminal, into the converter arm to provide voltage blocking. The switches of the high voltage module may be controlled by suitable control signals generated, for example, by controller 207.

Figure 3a illustrates a high side converter arm with the high voltage module 202 in series with the plurality of cells 103. Figure 3b illustrates the high voltage module in an on state where the converter arm is conducting. The at least first switch element 204 is on and conducting and the at least one second switch element 205 is off. A current can flow through the high voltage module and the plurality of cells 103 can be controlled in an appropriate sequence to provide voltage wave-shaping as is known in the art. Figure 3c illustrates the converter arm in the off state. The at least first switch element 204 is turned off and the at least one second switch element 205 is turned on. In this state the voltage V_{DC} of the high voltage capacitor 206 provides off state voltage support, i.e. voltage blocking for the converter arm. In this state there is substantially no, or only a limited, flow of current through the converter arm and the high voltage capacitor 206 being connected in series with the plurality of cells 103 results in sharing of the voltage difference across the converter arm between the high voltage module and the plurality of cells 103.

It will be noted that figure 2 illustrates the plurality of series connected cells 103 of a converter arm being connected to the high voltage module 202 via a limb reactor 208. In other embodiments however, as illustrated in figure 3a any limb reactor could be arranged on the other side of the high voltage module.

It should also be noted that figure 2 illustrates the high voltage module being connected between the plurality of series connected cells 103 of a converter arm and the relevant DC terminal. It could however be possible to have the high voltage module connected between the plurality of series connected cells 103 and the relevant AC terminal. Indeed in some embodiments it may be possible for the high voltage module to be located between cells 103 of the plurality of cells provided for wave-shaping.

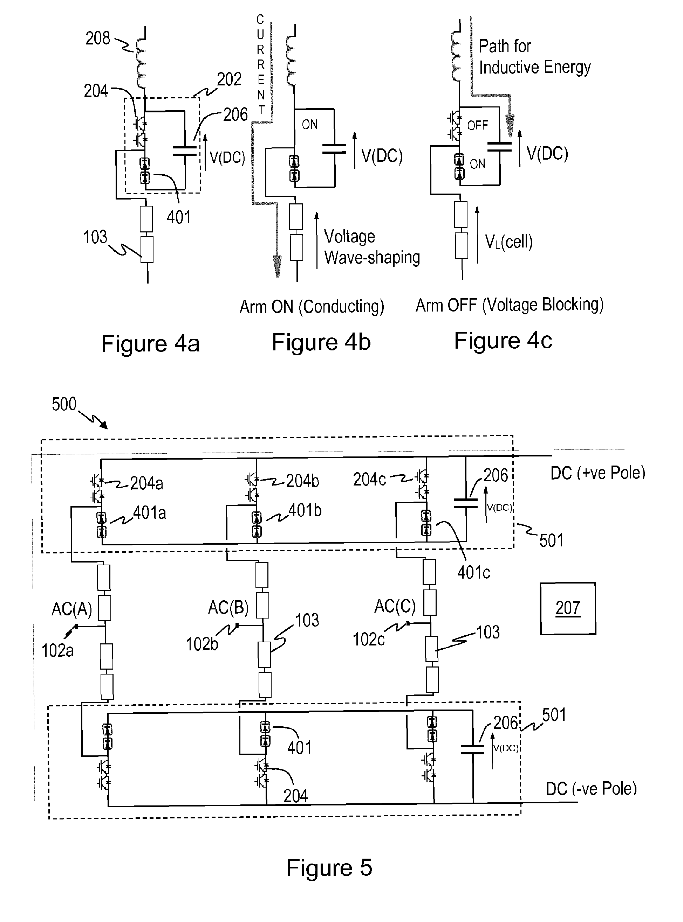

If the high voltage module is only used for voltage blocking in an off state of the converter arm then, in some embodiments, the at least one second switching element may comprise one or more uncontrolled switch elements such as diodes. As will be understood by one skilled in the art a diode is effectively a unidirectional automatic switch. If the high voltage module is only used to provide voltage blocking in an off state, it is only necessary to be able to control the time of turn on and turn off of the first switch element that bypasses the capacitor 206. Turning the at least one first switch element off will then automatically result in the capacitor voltage being connected in series to provide voltage blocking and, as no substantially current flows in this state the use of a component such as diode in the electrical path in this state is acceptable. Figure 4a illustrates a converter arm according to such an embodiment of the invention where the second switch elements 205 are provided by uncontrolled diodes 401. Figure 4b illustrates the on state of such a converter arm when the at least one first switch element 204 is turned on and figure 4c illustrates the off state where the at least one first switch element 204 is turned off.

The embodiments discussed above have provided a separate high voltage module, each having at least one high voltage capacitor or the like, in each converter arm. In some embodiments however a high voltage module and the high voltage capacitor(s) may be shared between more than one converter arm. Figure 5 illustrates an embodiment where a high voltage module 501 is shared between all the high side converter arms such that the high voltage capacitor(s) 206 of the module is shared between all the high side converter arms. Likewise a high voltage module 501 is shared between the low side converter arms.

The high voltage module 501 comprises at least one high voltage capacitor 206 which is shared in use between the converter arms connected to the high voltage module.

The high voltage module comprises at least one first switching element (204a-c) for each converter arm for connecting that converter arm to the DC terminal bypassing the high voltage capacitor 206. Thus first switching element(s) 204a provide a bypass path for the converter arm of phase limb A and first switching element(s) 204b provide a bypass path for the converter arm of phase limb B etc. Likewise the high voltage module comprises at least one second switching element (401 a-c) for each converter arm for connecting that converter arm to the DC terminal via the high voltage capacitor 206. In this example the second switching elements are provided by uncontrolled diodes 401 a-c but it will be appreciated that controlled switch elements such as IGBTs could be used.

The first and second switching elements for each converter arm may be controlled in the same manner as described above for an individual converter arm. When the relevant converter arm is in an on state the relevant first switching element(s) will be on and conducting, thus bypassing the high voltage capacitor. When the relevant converter arm is in an off state the relevant first switching element(s) will be off and that converter arm will only be connected via the high voltage capacitor 206 which will therefore provide voltage blocking support for the relevant converter arm. Sharing the high voltage capacitor in this way thus reduces the number of components required compared to each converter arm having its own distinct high voltage module.

As mentioned previously the relatively lower voltage cells 103 which are used for wave-shaping may be implemented in either a full-bridge arrangement or a half-bridge arrangement. A half-bridge arrangement typically requires fewer switching elements and thus allow for fewer components than when the cells 103 are implemented in a full bridge arrangement. However, as will be understood by one skilled in the art, a full bridge arrangement allows the cells to be used in a fault situation to provide DC fault blocking.

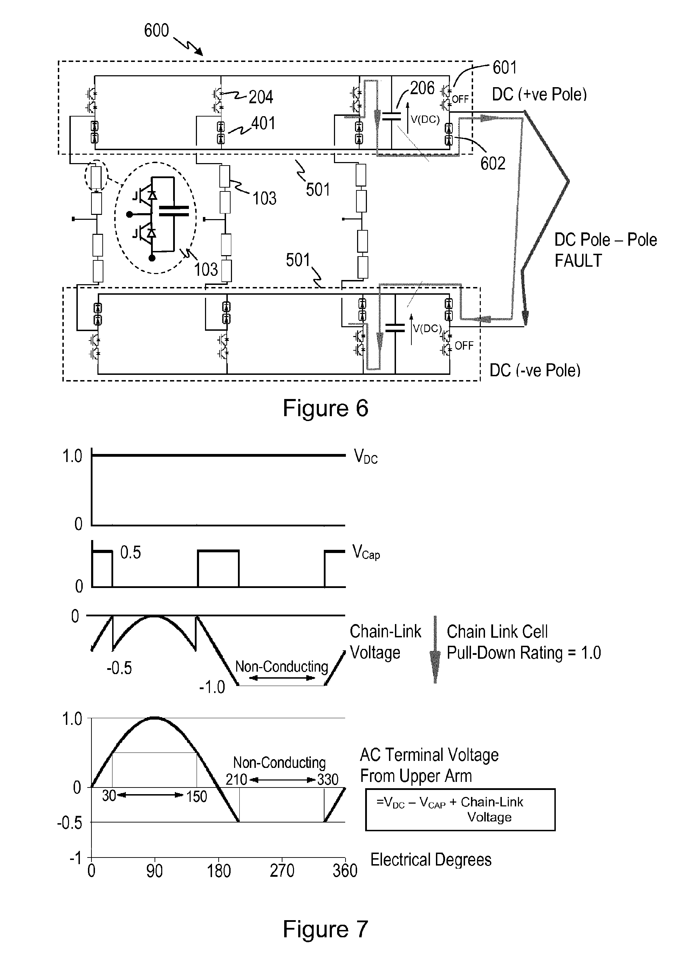

In some embodiments of the present invention the high voltage capacitor of the high voltage module may be used for fault blocking in a fault situation. At least one high voltage module may be arranged so that the high voltage capacitor(s) of the high voltage module may be connected into the power circuit in reverse in response to a DC fault. This means that the wave-shaping cells 103 may be implemented as half-bridge cells but the converter still offers fault blocking performance. Figure 6 illustrates one embodiment of a converter 600 with fault blocking capability.

The converter 600 has a high voltage module 501 shared between all the high side converter arms and also a high voltage module 501 shared between all the low side converter arms as described above. As described previously the high voltage module has respective first (204) and second (205, 401) switching elements for each converter arm. In this embodiment however there are two additional switching arrangements around the high voltage capacitor(s) of the high voltage module which allow the high voltage capacitor to be connected in reverse. Thus there is at least one third switching element 601 connected to a node between the first switching element(s) and the high voltage capacitor(s). At least one fourth switching element 602 connected to a node between the second switching element(s) and the opposite plate of the high voltage capacitor(s). The high voltage module is connected via one terminal connected to a node between the first and second switching elements and via another terminal connected between the third and fourth switching elements. It can therefore be seen that, in this example, the high voltage module is, in effect, implemented in a full bridge arrangement between the plurality of cells 103 of a converter arm and the relevant DC terminal.

In normal operation the at least one third switching element, which may comprise one or more controlled switching elements such as IGBTs with antiparallel diodes, may be turned on and the fourth switching elements may be off. The converter may then be operated as described previously - turning the first switching elements on (with the second switching element(s) off) provides a bypass path for when the relevant conductor arm is conducting and turning the turn first switch element(s) off connects the high voltage capacitor(s) 206 to a converter arm to provide voltage blocking support for the off state of the converter arm.

In a DC fault situation the third switching element(s) may be turned off and the fourth switching element(s) may be on. The first switching element(s) are also turned on to ensure that the high voltage capacitor is connected in the circuit. Given that the fourth switching elements are used in a fault blocking situation these elements may be implemented as uncontrolled switching elements such as diodes, however controlled switches such as IGBTs could be used in some embodiments.

Figure 6 illustrates the converter in this state in response to a DC pole-to-pole fault. The effect of a DC pole-to-pole fault will be that the DC terminals tend to source a large current in the direction indicated by the grey arrow in figure 6. By connecting the high voltage capacitor of a high voltage module in reverse the voltage of high voltage capacitor 206 opposes the current flow and provides fault blocking. In the example illustrated in figure 6 each of the high voltage capacitors 206, i.e. the capacitors of the shared high side high voltage module and the shared low side high voltage module each, in use, maintain a voltage substantially equal to the magnitude of the relevant DC terminal. Connecting both high voltage capacitors as illustrated can therefore offer good fault blocking performance.

It will be clear that the principles of fault blocking described with reference to figure 6 in the context of a shared high voltage capacitor could be applied to any of the other described embodiments. For instance each of the high voltage modules 202 of figure 2 could be implemented as a full-bridge arrangement to allow for fault blocking capability. In the discussion above the high voltage module has been described as only being used to provide voltage blocking to provide voltage support to a converter arm in an off state and optionally in reverse in a DC fault situation. The voltage step provided by connecting or disconnecting the high voltage capacitor(s) of the high voltage module is thus advantageously of the order of the magnitude of the relevant DC terminal to which the converter arm is connected. In some embodiments however the high voltage module may be configured to provide a voltage step which is lower than the magnitude of the DC voltage terminal but which is still significantly greater than the voltage step available from an individual cell of the plurality of chain-link cells 103. In such an embodiment the high voltage module may be controlled to provide a voltage step as part of the conducting period of the converter arm. This can be advantageous in that the requirements on the voltage range of chain-link cells of the converter arm are correspondingly reduced.

As discussed above one of the advantages of an AAC type converter compared to an MMC type converter is that as a converter arm is turned off for at least part of the AC cycle, and in the off state the voltage is shared between the cells 103 used for wave-shaping, i.e. the chain-link converter, and arm blocking elements. The cells 103 of a converter arm of an AAC type converter may therefore be designed to cope with a reduced voltage range compared to an MMC type converter, e.g. there may be fewer cells required. As was discussed if the high side converter arm is only conducting during the positive half of the AC cycle and likewise the low side converter arm is only conducting during the negative half of the AC cycle then the plurality of cells 103 of each converter arm may be designed with a voltage range (and voltage tolerance) equal in magnitude to the magnitude of the DC voltage at a DC terminal, V_{DC}.

In some instance however it may be desired to operate with a period of overlap between the on states of the converter arms of a phase limb. Thus the high side converter arm may be conducting for the whole of the positive half of the AC cycle and also for at least parts of the negative half cycle. Likewise the low side converter arm may be conducting for the whole of the negative half of the AC cycle and also for at least parts of the positive half cycle. This will result in periods of overlap when both converter arms are conducting. It also means that the voltage difference across the plurality of cells 103 of the high side converter arm will exceed V_{DC} before the converter arm is switched to an off state. Such a period of overlap can be beneficial in allowing active filtering of the DC network. It is also important in use to manage the operation of the cells 103 forming the chain-link converter to allow for voltage balancing between the various cells. Having a longer period of conduction allows for more time to manage the energy/voltage of the chain link cells 103.

For example, imagine that positive half of the AC waveform for one phase limb extends from a phase angle of 0° to 180° and the negative half of the cycle is thus between the phase angles of 180° and 360°. The high side converter arm may be arranged to be on and conducting for the positive part of the AC cycle and also for 30° before and after the positive half cycle, but otherwise in the off state. Likewise the low side converter arm may be arranged to be on and conducting for the negative half cycle and 30° before and after the negative half cycle. This means that between phase angles of 30° and 150° the high side arm is conducting when the low side arm is in an off state and between 210° and 330° the reverse is true. At other time, e.g. between 150° and 210° both converter arms are conducting.

This means that the high side converter arm is switched to the on state and conducting when the voltage at the AC terminal is -V_{DC}/2. Thus the voltage range that the plurality of cells 103 of the chain-link circuit experiences is one and a half times the magnitude of the voltage of the DC terminal, i.e. 1.5V_{DC}. The same is true for the low side converter arm. Thus the plurality of cells 103 of each voltage arm must be rated to withstand a voltage of 1.5V_{DC} and able to provide wave-shaping over this voltage range.

In embodiments of the present invention a high voltage module is used to provide a large voltage step during the overlap period. For example consider that the high voltage module provides a voltage step equal in magnitude to 0.5V_{DC} and that the high voltage module is controlled to introduce this voltage step only during the overlap period referred to above.

During the period when the upper converter arm is on and conducting, i.e. between phase angles of 30° and 150° in this example, the high voltage module is switched to bypass the high voltage capacitor. During this period the voltage at the AC terminal varies from +0.5V_{DC} to +V_{DC} and back to +0.5V_{DC}. The maximum voltage difference across the plurality of cells 103 of the chain-link during this period is thus equal in magnitude to 0.5V_{DC}. At a phase angle of 150° the low side converter arm is switched to the on state and starts conducting. At the same time the high voltage module is controlled to introduce a voltage step of 0.5V_{DC}. The plurality of cells 103 of the chain-link circuit of the high side converter arm are also controlled to take this step in voltage into account. At this point the voltage at the AC terminal is +0.5V_{DC} but because of the voltage step due to the high voltage module the voltage difference across the plurality of cells 103 of the high side converter arm has reduced to zero. The high side converter arm remains conducting until a phase angle of 210°, at which point the voltage at the AC terminal has dropped to -0.5V_{DC}. However due to the voltage step introduced by the high voltage module the maximum voltage difference across the plurality of cells 103 of the chain-link of the high side converter arm is equal in magnitude to V_{DC}. At this point the high side converter arm is switched to an off state and stops conducting. Thus the maximum voltage range required by the plurality of cells 103 of the chain-link circuit of the high side converter arm is equal in magnitude to V_{DC}, i.e. the magnitude of the voltage of the relevant DC terminal.

Figure 7 illustrates this operation for the high side converter arm. The top plot of figure 7 illustrates the voltage of the high side DC terminal which remains substantially constant at +V_{DC}. The second plot of figure 7 shows the voltage step introduced by the high voltage capacitor module. The high voltage module is controlled to introduce a voltage step of 0.5V_{DC} during the periods of overlap but is bypassed during the period between 30° and 150° when the high side arm only is conducting. In this example the voltage step is illustrated as also being removed during the period between 210° and 330° when the high side converter arm is not conducting. This assumes that some other arm blocking elements are used to switch the converter arm to an off state. As will be explained below however the high voltage module may be used to provide at least some voltage blocking during an off state in conjunction with other voltage blocking and/or arm switching elements.

The third plot illustrates how the voltage difference generated by the plurality of the cells 103 of the chain-link circuit varies over time. The chain link circuit is effectively controlled to generate a desired waveform, such as part of a sinusoid, but with a step change of 0.5V_{DC} corresponding to the periods when the voltage step provided by the high voltage module is added or removed. The last plot illustrates the resulting voltage waveform at the AC terminal due to the high side converter arm.

It can therefore be seen that the converter arm as a whole provides a voltage wave-shaping over a voltage range of 1.5V_{DC} but that the plurality of cells 103, i.e. the chain-link converter of the converter arm, need only be designed to operate over a voltage range of V_{DC}. This offers a significant reduction in the number of components used for the chain link circuit, i.e. the numbers of cells 103 (for a given voltage resolution).

It will be noted that during the overlap period when a converter arm is conducting and the high voltage capacitor(s) is/are connected to provide a voltage step that a current may flow to or from the high voltage capacitor. However during the whole of the overlap period the overall current flow has a zero DC component, i.e. the current that flows in the first half of the overlap period is effectively substantially equal and opposite to the current that flows in the second half of the overlap period. It is therefore possible to use the high voltage capacitor to provide a voltage step during this period whilst maintaining correct charge levels on this capacitor.

In embodiments where the high voltage module is used to provide a voltage step whilst the converter arm is conducting the second switch element(s) 205, used to connect the high voltage capacitor(s) in series in the converter arm, should be controlled switch elements such as IGBTs or the like rather than just comprising uncontrolled switches such as diodes.

It will be appreciated that the plurality of cells 103 of the chain-link circuit of a converter arm may therefore be designed to tolerate a maximum voltage difference which is less than the maximum voltage difference across the converter arm in use and that the high voltage module may not, on its own, able to provide sufficient voltage blocking in the converter arm off state. For example the plurality of cells 103 of the chain-link circuit of a converter arm may be designed to tolerate a maximum voltage difference equal to the magnitude of the DC voltage at the DC terminal, i.e. V_{DC}, and the high voltage module may provide a voltage for voltage blocking equal in magnitude to say 0.5V_{DC}. In such a case the high voltage module is not, on its own, able to provide sufficient voltage blocking in the converter arm off state. It will be recalled that the voltage at the AC terminal may typically vary from a level substantially equal to the high side DC voltage +V_{DC} to a level substantially equal to the low side DC voltage -V_{DC} and thus each converter arm will, at some point experience a voltage difference of 2V_{DC}.

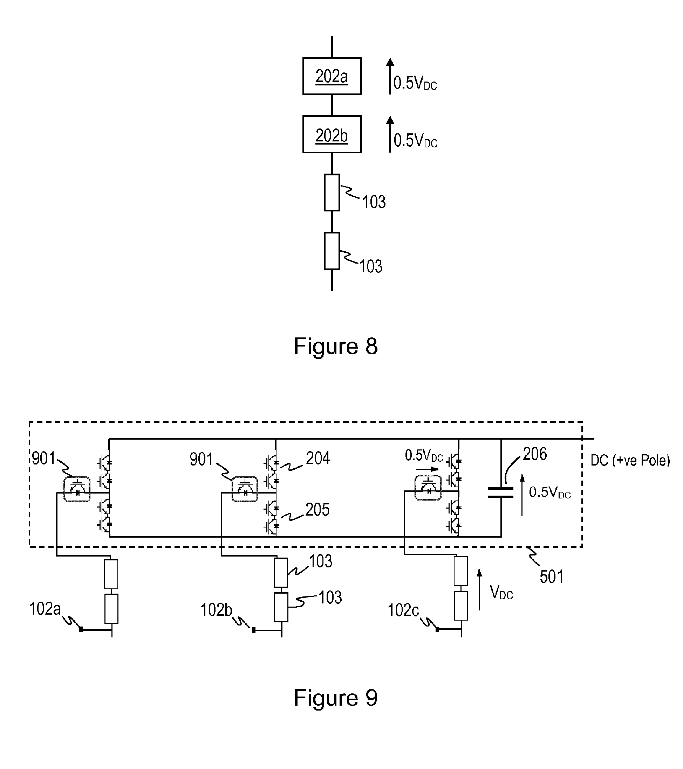

In some embodiments therefore a converter arm may comprise at least two high voltage modules 202a and 202b as illustrated in figure 8. Together the high voltage modules may be capable of providing sufficient voltage support in the converter off state but one of the high voltage modules may be used individually to provide a voltage step during wave-shaping. For instance collectively the two high voltage modules may be able to provide a blocking voltage equal in magnitude to the voltage at a DC terminal, e.g. V_{DC}. In some embodiments each modules may be able to provide a voltage step of 0.5V_{DC}, although in some embodiments the modules may provide different voltage ratios. One of the high voltage modules, e.g. module 202a, may be used for voltage blocking in the converter off state as described previously. In other words the module 202a may be controlled so that the capacitor(s) of the module are bypassed when the converter arm is in an on state and conducting but connected in series during the converter arm off state. The other high voltage module 202b may be used both to provide a voltage step during the overlap period and also in the off state for voltage blocking.

Additionally or alternatively additional voltage blocking support may be provided by one or more arm switching elements such as illustrated in figure 9. Figure 9 shows a shared high voltage module 501 which has a high voltage capacitor 206 capable of providing a voltage step equal to 0.5V_{DC}. In addition each converter arm comprises at least one arm switching element 901 having a voltage withstand capability of at least 0.5V_{DC}. The or each arm switching element 901 may comprise one or more controlled switch elements such as IBGTs or the like. In use the arm switching element is controlled to be on when the relevant converter arm is in an on state and conducting. In some embodiments the high voltage capacitor 206 may be controlled to provide a voltage step during the arm on state as described above. In the off state of the converter arm the arm switching element is turned off, as is the at least one first switching element 204 for the relevant converter arm, with the at least one second switching element 205 being turned on, thus connecting the high voltage capacitor in series with the plurality of cells 103 for the relevant converter arm. Collectively the high voltage capacitor 206 and arm switching element 901 provide voltage blocking support to the converter arm in the off state.

It will be appreciated that the arm switching elements may be separate and distinct from the high voltage module 501 and may for instance be located on the opposite side of the plurality of cells 103 of the chain-link circuit of a converter arm.

It will of course be appreciated that in some embodiments the value of the voltage step provided by the high voltage capacitor(s) of a high voltage module may have a different value from 0.5V_{DC}. For example if the converter is arranged to operate with a different overlap period the value of the voltage step provided by the high voltage module may be designed to match the value of the voltage at the AC terminal at the start of the period of overlap. Thus if for instance the overlap period were shorter than the 60° overlap in phase angle described above, the voltage at the AC terminal at the start of the overlap periods may be lower than ±0.5V_{DC}, for example ±0.3V_{DC}. The high voltage modules of the converter arms may therefore be arranged to provide a voltage step equal in magnitude to 0.3V_{DC}.

The magnitude of the voltage step provided by the high voltage module may however be different to the magnitude of the voltage at the AC terminal at the start of the overlap period. The magnitude of the voltage step provided may be lower than the voltage at the AC terminal at the start of the overlap period, in which case the plurality of cells 103 of the chain link-converter would still provide a voltage step at the start of the overlap period. For instance if the overlap period were such that the voltage at the AC terminal at the start of the overlap period were ±0.5V_{DC} but the voltage step provided by the high voltage capacitor(s) is 0.4V_{DC} then as the high voltage capacitor is connected to provide the voltage step of 0.4V_{DC} the plurality of cells 103 would be controlled to provide a further voltage step of 0.1V_{DC}.

In some embodiments magnitude of the voltage step provided may be higher than the voltage at the AC terminal at the start of the overlap period, in which case the voltage step provided by the high voltage module may be provided for only part of the overlap period, for instance when the magnitude of the voltage at the AC terminal has reduced to a level below that of the voltage step. For instance if the overlap period were such that the voltage at the AC terminal at the start of the overlap period were ±0.5V_{DC} but the voltage step provided by the high voltage capacitor(s) is 0.6V_{DC} then as the high voltage capacitor may be connected to provide the voltage step of 0.6V_{DC} only once the difference between the voltage at the DC terminal and AC terminal has a magnitude equal to or greater than 0.6V_{DC}.

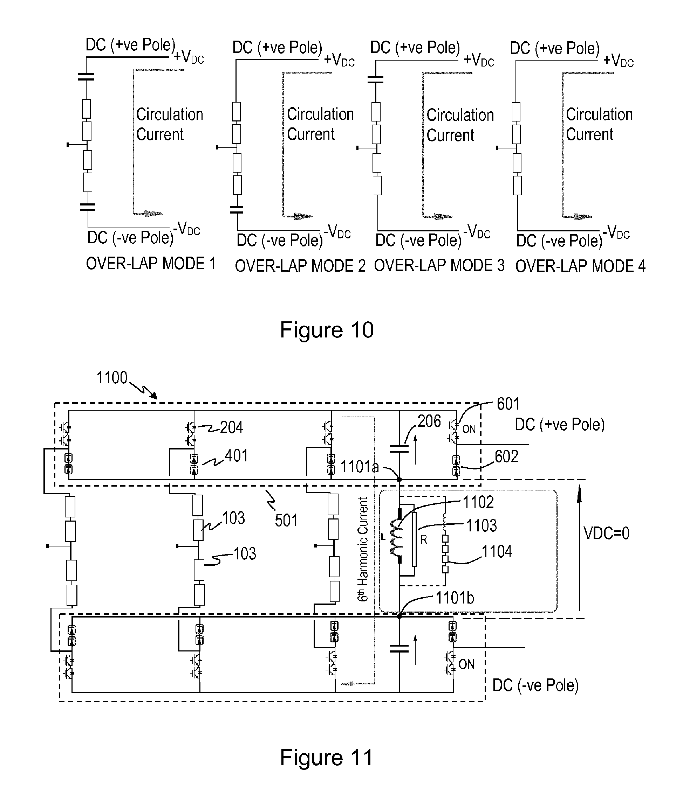

It will be noted that a converter according to embodiments of the present invention has a number of over-lap modes which can involve the high voltage capacitor(s) of a high side high voltage module and/or the high voltage capacitor(s) of a low side high voltage module. Figure 10 illustrates the various possible overlap modes when both converter arms of a phase limb are conducting. In mode 1 high voltage capacitors are connected in series on both the high side and low side converter arms of a phase limb. Modes 2 and 3 correspond to high voltage capacitors in series for only one of the low side and high side converter arms respectively. Mode 4 illustrates a mode where the high side and low side high voltage capacitors are all bypassed for a phase limb.

It is therefore possible to maintain and control the voltage on both the high side and the low side high voltage capacitors or one capacitor independently of the other by circulation of a DC current. These circulation paths, particularly that in mode 1, also enable an AC current to be circulated during the over-lap period and active filtering of the natural 6^{th} harmonic DC ripple current as is known for AAC type converters.

The control of both the DC and AC components of circulation current may be achieved using the voltage waveform available from the plurality of cells 103 in each converter arm acting against limb reactors as is known for AAC type converters. One skilled in the art would therefore be readily able to adopt the control of the plurality of cells 103 of the converter arm for an AAC type converter to provide a desired DC and/or AC circulation current to maintain and control the voltage on the high voltage capacitors in embodiments of the present invention.

As described previously the high voltage capacitor(s) of a high voltage module may be configured to operate to maintain a voltage substantially equal to the voltage at the relevant DC terminal for that converter arm, i.e. a voltage of magnitude V_{DC}. If, during normal operation, high voltage capacitors are connected to the high side and low side DC terminals it is noted that the terminals of the capacitors which are not connected to the DC terminals will have substantially the same voltage as one another. In other words there may be no substantial DC stress between these terminals of the high voltage capacitors. This means that in use these high voltage capacitors may be used as part of a DC filter arrangement.

Figure 11 illustrates a converter 1100 according to an embodiment of the invention including the high voltage capacitors as part of a DC filter. The converter 1100 of this embodiment is similar to converter 600 illustrated in figure 6 but includes a DC filter. The converter in this embodiment has a high voltage module 501 on both the high side and the low side, each having a high voltage capacitor 206. As mentioned previously in normal operation the at least one third switching element 601 of each high voltage module 501 is on connecting high-voltage capacitor to the DC terminal, DC+ or DC-respectively. As each high voltage capacitor 206 maintains a voltage substantially equal in magnitude to V_{DC} in use the terminals 1101 a and 1101 b of the high voltage capacitors 206 have substantially no DC voltage stress. One or more filter components are thus connected between these terminals 1101 a and 1101b.

In one embodiment the filter components comprise an inductor 1102 and resistance 1103 to form, together with the high voltage capacitors 206 a passive filter. This filter may for example be tuned to filter a particular noise component, for example the 6^{th} harmonic DC line current naturally created by operation of the converter. Alternatively, the filter components could implement an active filter. For instance the filter components may comprise a plurality of full-bridge chain link cells 1104 which are operable to drive a desired anti-phase AC current to cancel any alternating current in the DC lines. Given the harmonic currents are alternating, there is no net charging or discharging of the high voltage capacitors or the full-bridge chain links.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. A voltage source converter having at least one phase limb, each phase limb comprising a high side converter arm connecting an AC terminal to a high side DC terminal and a low side converter arm connecting the AC terminal to a low side DC terminal, wherein at least one converter arm comprises:
a first plurality of cells, each cell of said first plurality comprising an energy storage element that can be selectively connected in series in the converter arm or bypassed; and
a high voltage module connected in series with said first plurality of cells, the high voltage module comprising at least one energy storage element that can be selectively connected in series in the converter arm or bypassed,
wherein the voltage rating of the high voltage module is greater than any of the cells of the first plurality of cells.

2. A voltage source converter as claimed in claim 1 wherein the voltage rating of the high voltage module is at least half of the voltage magnitude, in use, of the DC terminal to which the converter arm is connected.

3. A voltage source converter as claimed in any preceding claim wherein the high voltage module comprises at least one first switching element for selectively providing an electrical path that bypasses the at least one energy storage element and at least one second switching element for selectively providing an electrical path that connects the at least one energy storage element in series in the converter arm.

4. A voltage source converter as claimed in claim 3 wherein the at least one second switching element comprises at least one uncontrolled switching element.

5. A voltage source converter as claimed in claim 3 or claim 4 wherein the high voltage module comprises at least one third switching element for selectively allowing the at least one energy storage element to be bypassed or connected to provide a voltage of a first polarity and at least one fourth switching element for selectively allowing the at least one energy storage element to be connected to provide a voltage of a second polarity which is opposite to the first polarity.

6. A voltage source converter as claimed in claim 5 comprising a fault controller configured to control the third and fourth switching elements such that in normal operation the at least one third switching element is turned on and the at least one fourth switching element is off and such that, in response to a detection of a DC fault, the third switching element is turned off and the at least one fourth switching element is on.

7. A voltage source converter as claimed in any preceding claim having a plurality of phase limbs wherein each converter arm comprises a separate high voltage module.

8. A voltage source converter as claimed in any of claims 1 to 6 having a plurality of phase limbs wherein a high voltage module is connected to a plurality of converter arms such that the at least one energy storage element can be connected in series to more than one converter arm.

9. A voltage source converter as claimed in any preceding claim comprising a converter controller configured to control the converter arm in a sequence comprising an arm on state and an arm off state, wherein in the arm on state the first plurality of cells is selectively controlled to provide voltage wave-shaping and in the arm off state the high voltage module is controlled to connect the at least one energy storage element in series with the first plurality of cells.

10. A voltage source converter as claimed in claim 9 wherein the converter controller is configured such that when the converter arm is in the arm on state the high voltage module is controlled such that at least one energy storage element is bypassed.

11. A voltage source converter as claimed in claim 9 wherein the converter controller is configured to control the high voltage module such that for part of the time that that converter arm is in the arm on state the at least one energy storage element is connected in series with the first plurality of cells.

12. A voltage source converter as claimed in claim 11 wherein the period during the arm on state in which the at least one energy storage element is connected in series with the first plurality of cells corresponds to a period in which both converter arms of the phase limb are in the arm on state.

13. A voltage source converter as claimed in any of claims 9 to 12 further comprising at least one arm switching element in series with the high voltage module, wherein the converter controller is configured to control the at least one arm switching element to be on in the converter arm on state and to be off in the converter arm off state.

14. A voltage source converter as claimed in any of claims 1 to 10 wherein the voltage rating of the high voltage module is substantially equal to the voltage magnitude, in use, of the DC terminal to which the converter arm is connected.

15. A voltage source converter as claimed in claim 14 wherein each converter arm of a phase limb comprises a high voltage module and wherein a low side terminal of the at least one energy storage element of the high voltage module of the high side converter arm is connected to a high side terminal of the at least one energy storage element of the high voltage module of the low side converter arm via at least one filter component.

16. A method of operating a voltage source converter having at least one phase limb, each phase limb comprising a high side converter arm connecting an AC terminal to a high side DC terminal and a low side converter arm connecting the AC terminal to a low side DC terminal, wherein at least one converter arm comprises:
a first plurality of cells, each cell of said first plurality comprising an energy storage element that can be selectively connected in series in the converter arm or bypassed; the method comprising:
selectively switching the cells of the first plurality of cells to provide voltage wave-shaping during an on state of the converter arm; and;
during an off state of the converter arm connecting at least one energy storage element of a high voltage module in series with the first plurality of cells, wherein the voltage of the at least one energy storage element of the high voltage module is greater than the voltage of any of the energy storage elements of the first plurality of cells.
